(19) Europäisches Patentamt
European Patent Office
Office européen des brevets

(11) **EP 1 272 385 B1**

(12) **FASCICULE DE BREVET EUROPEEN**

(45) Date de publication et mention
de la délivrance du brevet:
**23.03.2005 Bulletin 2005/12**

(51) Int Cl.[7]: **B62D 17/00**, B60B 35/00,
B60G 7/00, B60G 21/05,
B62D 65/00

(21) Numéro de dépôt: **01940261.9**

(22) Date de dépôt: **22.03.2001**

(86) Numéro de dépôt international:
**PCT/EP2001/003284**

(87) Numéro de publication internationale:
**WO 2001/074647 (11.10.2001 Gazette 2001/41)**

(54) **PROCEDE D'ASSEMBLAGE D'UN SYSTEME DE SUSPENSION**

VERFAHREN ZUM ZUSAMMENBAU EINES AUFHÄNGUNGSSYSTEMS

METHOD FOR ASSEMBLING A SUSPENSION SYSTEM

(84) Etats contractants désignés:
**AT BE CH CY DE DK ES FI FR GB GR IE IT LI LU
MC NL PT SE TR**

(30) Priorité: **31.03.2000 FR 0004530**

(43) Date de publication de la demande:
**08.01.2003 Bulletin 2003/02**

(73) Titulaires:
• **Société de Technologie Michelin
63000 Clermont-Ferrand Cedex 09 (FR)**
• **MICHELIN RECHERCHE ET TECHNIQUE S.A.
CH-1763 Granges-Paccot (CH)**

(72) Inventeur: **CHEVILLARD, Pierre-Yves
F-73200 Albertville (FR)**

(74) Mandataire: **Bauvir, Jacques
M.F.P. Michelin,
SGD/LG/PI-F35-Ladoux
63040 Clermont-Ferrand Cedex 09 (FR)**

(56) Documents cités:
EP-A- 0 470 527        WO-A-98/16418
US-A- 4 872 699        US-A- 5 110 151
US-A- 5 383 678        US-A- 5 598 357
US-A- 5 918 707

**Description**

La présente invention concerne les méthodes d'assemblages de systèmes mécaniques, en particulier de dispositifs de liaison au sol destinés à équiper des véhicules et la dispersion des cotes obtenues lors de leur fabrication.

Sur un véhicule automobile, les roues sont maintenues en position, relativement à la caisse, par la suspension. Plus précisément, les roues sont montées sur des moyeux et ces moyeux tournent, par l'intermédiaire d'un roulement ou d'un ensemble de roulements, par rapport à une fusée ou un porte-roue lié aux éléments de suspension, eux-mêmes liés à la caisse. L'orientation précise de l'axe de la roue (matérialisé par les roulements) est un élément important pour le comportement du véhicule à l'usage. C'est pourquoi, les constructeurs automobiles se fixent des tolérances étroites quant à l'orientation finale de l'axe de la roue et cette orientation est le résultat de l'assemblage de nombreuses pièces mécaniques liées les unes aux autres par des articulations ou des liaisons rigides. Le principe des chaînes de cotes fait que, pour réaliser une cote finale (ici, un angle d'orientation final) dans une certaine tolérance, les tolérances de fabrication de chaque élément de l'assemblage sont une fraction de la tolérance finale. Même en faisant abstraction de la variabilité de la position des points d'attache à la caisse et en ne considérant que le sous-ensemble suspension, l'obtention des cotes globales dans les tolérances exigées pose donc un réel problème au fabricant.

On connaît, à ce problème, des solutions que l'on met en oeuvre en fonction du type de systèmes concerné et de la précision recherchée. Par exemple, pour un essieu dit "multi-bras" (car il est constitué de plusieurs bras contrôlant les mouvements du porte roue), on peut obtenir la précision voulue en procédant au réglage du système sur un banc de mesure après assemblage. Ce réglage s'effectue par l'adaptation de la longueur de certains éléments à l'aide, par exemple, d'une liaison vis-écrou ou par le déplacement de points d'attache, par exemple, grâce à des trous oblongs. Ce type de solutions impose une conception réglable (donc plus lourde et/ou plus chère) du système et une étape de réglage complexe et coûteuse. De plus, ce réglage est souvent perdu lors d'une réparation ultérieure sur le véhicule et il faut alors procéder à un nouveau réglage. Une autre solution, souvent employée dans le cas d'essieux mécano-soudés (comme les essieux arrières torsibles), est de réaliser, après assemblage des éléments, un usinage de surfaces de référence, par exemple, des platines sur lesquelles sont fixées les fusées. Cette étape d'usinage a également un coût important et impose la présence d'une réserve de matière destinée à permettre l'usinage sans remettre en cause la solidité du système.

L'objectif de l'invention est de permettre une réduction de la dispersion statistique de l'orientation finale de l'axe de roue en évitant tout usinage final ou introduction d'éléments réglables supplémentaires.

La fusée est généralement fixée par des vis ou par soudage sur une platine ou dans un alésage et pour contrôler la dispersion de l'orientation finale de cette fusée, on contrôle généralement l'orientation du plan de la platine ou de l'axe de l'alésage. Ceci pour au moins deux raisons: d'une part, la dispersion introduite par l'assemblage de la fusée est négligeable car une bonne précision peut être facilement obtenue par tournage et d'autre part, la fusée ne fait pas toujours partie du sous-ensemble pré-assemblé.

Un principe de l'invention est d'utiliser l'étape de montage de la fusée pour réduire la dispersion statistique finale en compensant, au moins en partie, les dispersions des cotes des autres éléments constitutifs du système. Pour ce faire, on utilise une fusée dont l'axe forme un angle de correction connu avec l'axe de sa surface destinée à prendre appui sur la platine (ou dans l'alésage) et on fixe cette fusée selon un azimut en fonction de la déviation angulaire de la platine (ou de l'alésage). On peut de cette manière, réduire statistiquement la dispersion finale de l'orientation de l'axe de la fusée.

- L'objectif de l'invention est donc atteint par un procédé d'assemblage selon la revendication principale.

Des modes préférés de réalisations de l'invention vont être décrits afin d'en illustrer les principes mais de nombreux autres modes de réalisation de l'invention sont possibles.

- Fig 1 : Schéma descriptif des angles caractéristiques du procédé de l'invention,
- Fig 2a, 2b : Représentation graphique du principe de correction de l'invention,
- Fig 3 : Schéma de principe de l'application du procédé de l'invention à un système de suspension dit "multi-bras",
- Fig 4 : Schéma de principe de l'application du procédé de l'invention à un essieu torsible,
- Fig 5 : Schéma d un mode de liaison d une fusée de correction sur un bras de suspension,

Les angles représentés sur les figures sont largement amplifiés afin de faciliter la lecture. Ces angles sont, en réalité, généralement nettement inférieurs à 1 degré. C'est également cet ordre de grandeur qui permet certaines simplifications comme celle de considérer que la tangente de la somme de deux angles est sensiblement égale à la somme de leurs deux tangentes.

On désigne par "azimut" l'angle de la projection d'un axe sur un plan selon une direction normale à ce plan. On désigne par "azimutage" le fait de positionner un élément par rapport à un autre selon un azimut déterminé.

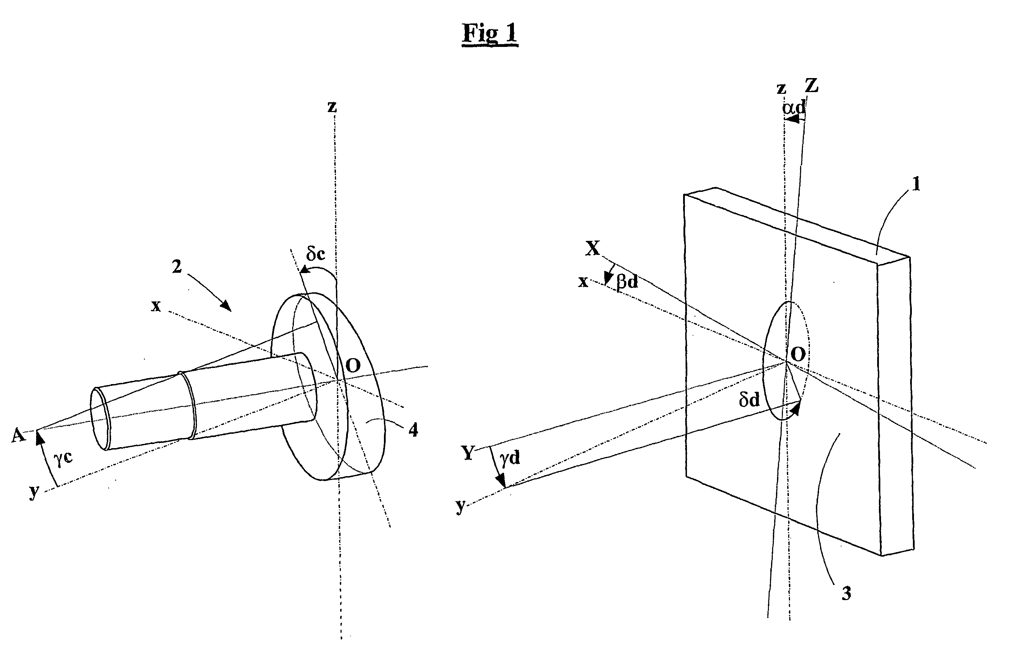

La figure 1 illustre le principe à la base de l'invention. On y a représenté une platine (1) solidaire du système de suspension (non représenté). Cette platine est destinée à recevoir une fusée portant une roue du véhicule. Le plan de la platine Oxz qui correspond à la surface de réception (3) de la fusée, présente un défaut d'orientation par rapport au repère OXYZ défini par les angles nominaux (de carrossage et de pince) déterminés pour un certain type de véhicule. Ce défaut d'orientation a deux composantes: un défaut de carrossage $\alpha$d par rapport à l'angle de carrossage nominal et un défaut de pince $\beta$d par rapport à l'angle de pince nominal. Ces deux composantes $\alpha$d et $\beta$d se combinent pour former l'angle de défaut $\gamma$d dont l'azimut dans le plan de référence OXZ est $\delta$d. La fusée de correction (2) comporte un axe de fusée (OA) et un axe d'appui (Oy) caractéristique de sa surface d'appui (4) sur la platine (l'axe Oy est commun à la surface d'appui (4) de la fusée et à la surface de réception (3) de la fusée sur la platine). Ces deux axes (OA et Oy) forment un angle de correction déterminé $\gamma$c. Le procédé de l'invention consiste à positionner et fixer la fusée sur la platine suivant un azimut de correction $\delta$c sensiblement égal à $\delta$d + $\pi$, afin de minimiser le défaut statistique global d'orientation finale de la fusée montée. On peut, par analogie avec les angles de défaut, définir $\alpha$c et $\beta$c comme les angles de correction de carrossage et de pince qui varient en fonction de $\gamma$c et $\delta$c.

On voit bien que l'on peut caractériser l'orientation des plans ou des axes de deux manières, soit par les angles de carrossage ($\alpha$) (angle de l'axe Oz avec l'axe OZ) et de pince ($\beta$) (angle de l'axe Ox avec l'axe OX), soit par l'angle résultant ($\gamma$) (c'est-à-dire l'angle de l'axe Oy avec l'axe OY) et son azimut ($\delta$) dans le plan OXZ. Ces deux manières sont équivalentes et se déduisent l'une de l'autre par le calcul, de façon connue à l'aide des équations suivantes:

$$(tg\alpha)^2 + (tg\beta)^2 = (tg\gamma)^2 \qquad tg\delta = \frac{tg\beta}{tg\alpha}$$

Le procédé de l'invention peut être appliqué de manières différentes dans des buts différents.

On peut vouloir limiter au maximum le défaut "individuel", c'est-à-dire celui de chaque sous-ensemble produit. Pour cela, on sélectionne une fusée de correction dont l'angle de correction correspond sensiblement à l'angle de défaut constaté ($\gamma$d) sur la platine et on positionne cette fusée de correction (2) selon l'azimut de correction ($\delta$c) sensiblement égal à l'azimut du défaut constaté ($\delta$d) + $\pi$(en radian). On a besoin pour cela de plusieurs types de fusées, chaque type ayant un angle de correction ($\gamma$c1, $\gamma$c2, $\gamma$c3, $\gamma$c4...) différent afin de couvrir plus ou moins finement, une étendue plus ou moins importante de défauts corrigibles. Cette correction nécessite la détermination complète du défaut d'orientation ($\alpha$d et $\beta$d ou $\gamma$d et $\delta$d). Ceci constitue l'un des modes de réalisation préférés de l'invention.

Une approche différente est celle qui consiste à réduire la dispersion (connue) d'une production de systèmes de suspension qui, sans correction, ne serait pas conforme, c'est-à-dire qu'un nombre trop important de sous-ensembles seraient hors tolérances quant aux angles de carrossage ($\alpha$) et de pince ($\beta$). On peut réaliser cette réduction de dispersion statistique en limitant l'intervention à la pose de fusées de correction d'un type unique ($\gamma$c). On peut de cette manière garantir une dispersion réduite par rapport à la dispersion de la production par le seul choix de l'azimut de pose en fonction de l'azimut constaté $\delta$d du défaut. Dans ce cas, seule la détermination (directe ou par le calcul en fonction des angles mesurés, voir plus haut) de l'azimut du défaut ($\delta$d) est nécessaire.

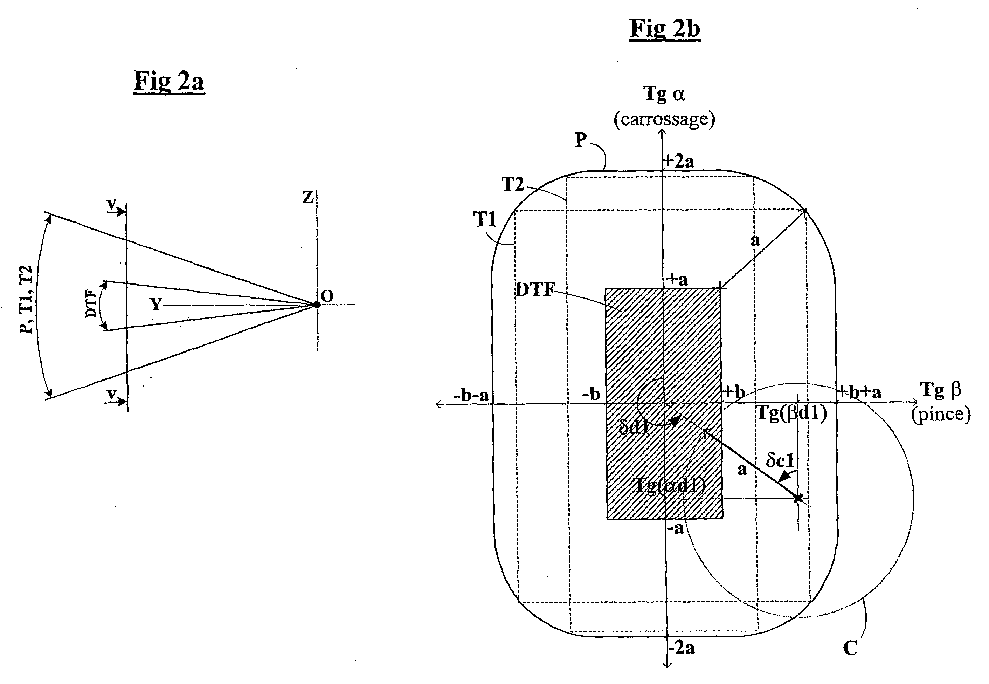

Cette application particulière du procédé sera mieux comprise à l'aide de la description de la représentation graphique des figures 2a et 2b.

La figure 2a est une coupe schématique dans le plan OYZ qui montre le domaine de tolérances (DTF) de l'orientation finale de la fusée par rapport au repère de référence OXYZ. On a représenté également l'étendue supérieure des domaines de tolérances (P, T1, T2) de l'orientation de la surface de réception (3) de la fusée sur le système de suspension selon le procédé de l'invention. Cette vue permet de mieux comprendre le lien de la représentation graphique de la figure 2b avec la géométrie décrite à la figure 1.

La figure 2b visualise les angles décrits plus haut sous la forme de leurs tangentes et correspond à une coupe de la figure 2a vue selon la direction V (les angles considérés étant petits, c'est-à-dire qu ils se comportent sensiblement comme leurs tangentes). On a représenté en ordonné, la tangente de l'angle de défaut de carrossage (tg $\alpha$) et en abscisse, la tangente de l'angle de défaut de pince (tg $\beta$). Le rectangle hachuré correspond au domaine visé de tolérance de l'orientation de la fusée, par exemple, +/-a en carrossage (angle $\alpha$) et +/-b en pince (angle $\beta$). On utilise une fusée de correction qui présente un angle de correction ($\gamma$c) dont la tangente est au plus égale à la demie diagonale du rectangle des tolérances ($tg(\gamma c) \leq \sqrt{a^2 + b^2}$). Prenons, par exemple, $\gamma$c tel que tg ($\gamma$c) = a. Un défaut présent ($\alpha$d1, $\beta$d1) correspond à un angle de défaut $\gamma$d1 selon un azimut de défaut $\delta$d1. Ce défaut sera ramené dans le domaine de tolérance (domaine hachuré) par la pose de la fusée de correction (2) selon un azimut de correction $\delta$c1 sensiblement égal à l'azimut de défaut constaté $\delta$d1 + $\pi$. Le cercle (C) de rayon a représente les corrections possibles grâce à une fusée de correction présentant un angle $\gamma$c tel que tg ($\gamma$c) = a. On peut ainsi déterminer une zone de défaut corrigible représentée par le périmètre (P) distant de "a" du domaine de tolérance de l'orientation finale de la fusée montée. Cette zone de défaut corrigible peut être à son tour définie comme la zone de tolérance de l'orientation de la platine, c'est-à-dire du sous-ensemble de suspension hors fusée. On peut également définir un rectangle de tolérances (T1, T2) qui présente l'avantage de se décrire sous la forme de tolérances similaires à celle de l'orientation finale de la fusée (+/-a et +/-b) mais bien plus larges. On voit donc que ce procédé permet de réduire la dispersion d'une production en effectuant un simple azimutage d'une fusée de correction unique. Ainsi, si la production d'assemblages hors fusées est comprise dans un domaine de tolérance connu, on peut, par le procédé de l'invention, garantir la production d'ensembles équipés de fusées conformes à un domaine de tolérance réduit dans des proportions intéressantes.

Si l'on prend maintenant l'exemple d'un système de suspension hors-fusée parfaitement conforme, c'est-à-dire présentant des défauts d'angles de pince et de carrossage nuls, on voit bien que la correction par la pose d'une fusée de correction est inutile mais qu'elle est possible si l'angle de correction de la fusée répond au critère cité plus haut ($tg(\gamma c) \leq \sqrt{a^2 + b^2}$, c'est-à-dire $\gamma c \leq arctg\sqrt{a^2 + b^2}$ car $\gamma c$ est petit). Ce critère garantit que l'orientation de la fusée montée est conforme au domaine de tolérance malgré cette correction. C'est bien sûr dans cette possibilité que ce critère trouve son origine. L'intérêt d'une correction systématique est naturellement de permettre un procédé simple utilisant une fusée de correction unique quel que soit le défaut dans le domaine corrigible. Certains sous-ensembles voient leur précision détériorée par la correction mais il n'empêche que la dispersion est globalement réduite. Ceci constitue l'un des modes de réalisation préférés de l'invention.

Pour donner un exemple chiffré dérivé de la figure 2b, prenons le cas particulier d'un essieu dont les fusées doivent être orientées selon les angles nominaux avec une précision de +/-30' en carrossage et +/-15' en pince. On a donc a=tg(30') et b=(tg15'). On peut choisir comme précédemment de procéder à la pose d'une fusée ayant un angle de correction $\gamma c$ tel que tg($\gamma c$)=a=tg (30'), d'où $\gamma c$=30'. Le périmètre (P) s'étend alors de -a-b=tg(-45') à +a+b=tg(45') en abscisse (pince) et de -2a=tg(-60') à +2a=tg(60') en ordonnée (carrossage). Rappelons que ce périmètre correspond au domaine de tolérance rendu possible pour le sous-ensemble hors fusée. Dans cet exemple chiffré, on peut déduire (par exemple, du graphique) un rectangle de tolérances (T1, T2) avantageusement exploitable. On mesure là l'intérêt du procédé, en terme de réduction des coûts de fabrication.

En fonction de la technologie mise en oeuvre pour fixer la fusée au système de suspension, on peut vouloir réduire le nombre de positions possibles. En effet, si des liaisons par soudage ou par montage serré dans un alésage permettent de fixer la fusée selon n'importe quel azimut, certaines solutions peuvent entraîner une limitation des azimuts possibles. Par exemple, pour une fixation par vis ou boulons utilisant plusieurs perçages au choix, par exemple 4 vis pour 8 perçages espacés de 45°, permettent d'obtenir un nombre satisfaisant d'azimuts de fixations. Une telle limitation réduit légèrement le périmètre des défauts corrigibles mais cette solution peut être préférée en raison de la simplicité de mise en oeuvre. Si l'on se réfère à nouveau à la figure 2b, le périmètre P est réduit au rectangle T1 de hauteur $2 \times a + \sqrt{2} \times a$ et de largeur $2 \times b + \sqrt{2} \times a$. Naturellement, si on réalise une liaison par vis et des perçages oblongs permettant une latitude suffisante, on peut à nouveau fixer la fusée selon tous les azimuts.

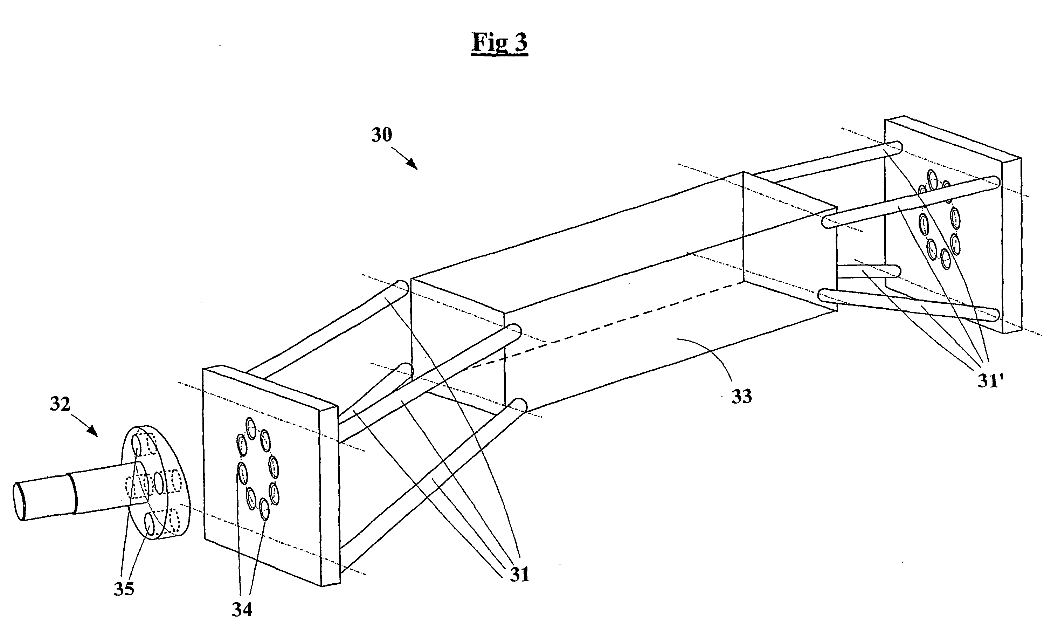

La figure 3 représente un système de suspension (30) dit "multi-bras". Il comprend un support (33) qui peut être soit la caisse du véhicule, soit un élément destiné à être fixé à la caisse. Des bras (31, 31') maintiennent de chaque coté du véhicule une platine. Sur chaque platine est fixée selon le procédé de l'invention une fusée de correction (32) percée de 4 perçages (35) par l'intermédiaire de 4 vis (non représentées). Le montage des vis peut se faire ici dans 8 perçages filetés (34), c'est-à-dire qu'on peut donner 8 azimuts différents à la correction. L'inverse est naturellement possible: fixer 4 vis dans 4 perçages filetés (34), la fusée comportant 8 percages (35). De même, les perçages filetés peuvent être situés sur la fusée et les perçages non filetés sur la platine. D'une manière générale, on peut prévoir un liaison par un nombre "n1" de vis ou boulons, un nombre "n2" de perçages sur l'une des deux pièces et un nombre "n3" de perçages filetés sur l'autre des deux pièces, n2 et n3 étant supérieurs ou égaux à n1. Le nombre d'azimuts différents étant alors supérieur ou égal au plus grand des nombres n2 et n3.

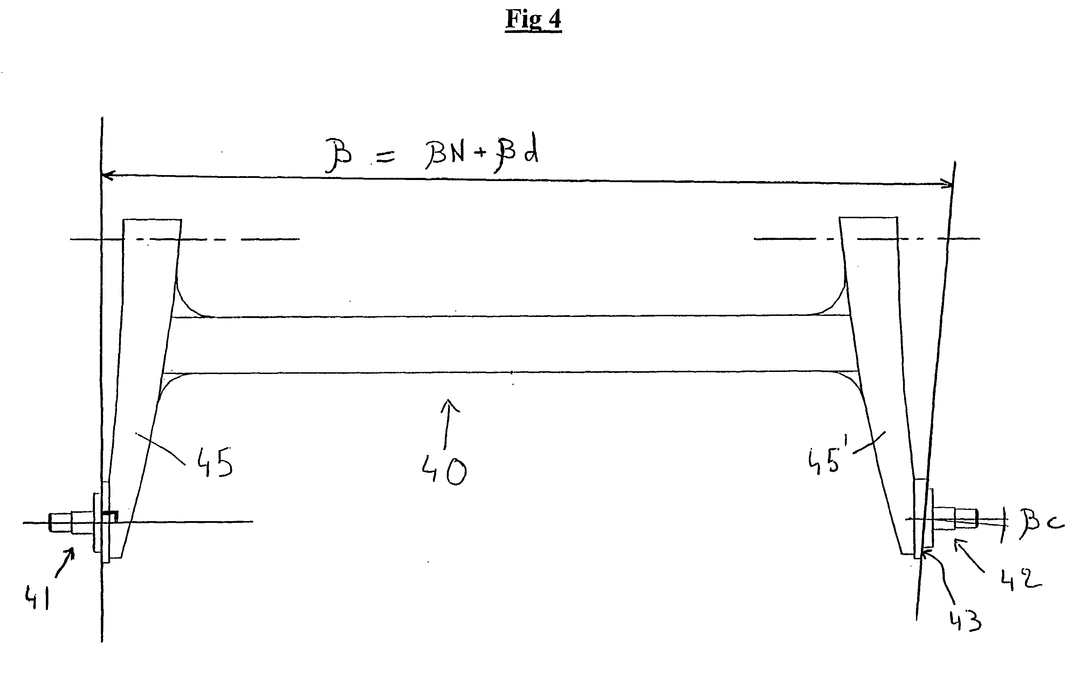

La figure 4 représente un essieu dit "torsible" (40) très couramment utilisé comme système de suspension arrière sur des véhicules de tourisme. Cet exemple permet d'illustrer un mode particulier de mise en oeuvre du procédé de l'invention. Les tolérances d'orientation de fusée sont parfois exprimées de façon relative, c'est-à-dire en terme d'orientation d'une fusée (41) par rapport à l'autre (42). C'est souvent le cas pour l'angle de pince qui est aussi celui dont la tolérance est généralement la plus étroite. Dans ce cas on aura intérêt (pour limiter le coût global de l'assemblage) à monter une fusée "normale" (41), c'est-à-dire sans correction ni azimutage, sur un bras de l'essieu (45) et à procéder à l'azimutage d'une fusée de correction (42) selon l'invention sur l'autre bras (45') de l'essieu en fonction du défaut relatif ($\alpha$d, $\beta$d). Le repère OXYZ par rapport auquel s'effectue la correction (voir plus haut) est alors lié à la fusée opposée pré-montée (41), c'est-à-dire que ($\alpha$d, $\beta$d) sont les angles du défauts de l'orientation de la surface de réception (43) par rapport à l'axe de la fusée opposée (41). On a représenté sur cette vue de dessus uniquement l'angle de pince relative $\beta$ et la correction de pince ($\beta$c) apportée par la fusée (42). L'angle de pince relative $\beta$ est la somme de l'angle de pince relative nominal $\beta$N et de l'angle de défaut de pince relative $\beta$d.

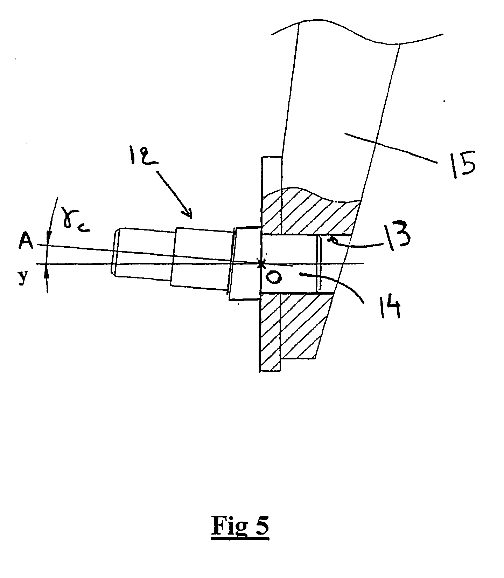

La figure 5 représente une vue partielle d'un bras de suspension (5) et de sa liaison à la fusée de correction (12). Ici, la surface de réception du système de suspension est un alésage (13) dans lequel se loge une projection cylindrique (14) constituant la surface d'appui de la fusée (12). L'axe (Oy) de la projection cylindrique (14) forme un angle de correction $\gamma c$ avec l'axe de fusée (OA) comme décrit précédemment. Après azimutage de la fusée (12), on peut fixer sa position par soudage, par vis ou par emmanchement serré de façon connue en soi.

Par analogie, ce principe, décrit ici dans le cas d'une fusée montée sur une platine, peut s'appliquer à d'autres systèmes qui ne comportent pas de fusée mais un porte-roue (voir plus haut) dans lequel des roulements guident un moyeu en rotation. C'est généralement le cas des systèmes de liaison au sol d'une roue motrice. Pour appliquer le principe de l'invention, on peut utiliser, par exemple, une pièce intermédiaire comportant une surface intérieure alésée destinée à recevoir les roulements et une surface extérieure cylindrique de révolution permettant une liaison selon un azimut déterminé dans un alésage de réception correspondant du porte-roue, les axes de ces deux surfaces formant un angle de correction. Le procédé selon l'invention consiste alors à fixer cette pièce intermédiaire sur le porte-roue selon un azimut de correction en fonction du défaut d'orientation mesuré de l'axe de l'alésage de réception du porte-roue.

Le procédé de l'invention peut être mise en oeuvre lors de l'assemblage des sous-ensembles complets de suspension, lors de l'assemblage des fusées sur des sous-ensembles préalablement assemblés ou bien après assemblage des éléments de suspension sur le véhicule.

## Revendications

**1.** Procédé d'assemblage d'une fusée (2, 12, 32, 42) sur un système de suspension (1, 31, 40, 15) destiné à équiper un véhicule, ledit système de suspension comportant une surface de réception (3, 13, 43) de la fusée, ladite fusée comportant un axe de fusée (OA) et une surface d'appui (4, 14) audit système de suspension, un axe caractéristique (Oy) de ladite surface d'appui formant un angle de correction "$\gamma c$" déterminé avec ledit axe (OA) de fusée, ladite surface de réception présentant, par rapport à un repère (OXYZ) défini par les angles nominaux de carrossage et de pince pour ledit véhicule, un défaut d'orientation que l'on peut décomposer en un angle de défaut "$\gamma d$" et un azimut de défaut "$\delta d$", l'angle de défaut étant l'angle séparant un axe (Oy) caractéristique de l'orientation de la surface de réception de l'axe correspondant (OY) dudit repère, l'azimut de défaut étant l'azimut, dans un plan de référence (OXZ) dudit repère, de l'axe (Oy) caractéristique de l'orientation de la surface de réception, ledit procédé comprenant les étapes suivantes:

- déterminer l'azimut de défaut "$\delta d$",
- positionner ladite fusée sur ledit système de suspension de telle manière que l'axe de ladite fusée soit orienté selon un azimut de correction "$\delta c$", $\delta c$ étant sensiblement égal à $\delta d + \pi$.

**2.** Procédé selon la revendication 1, **caractérisé en ce qu'**il comprend, en outre, l'étape consistant à sélectionner une fusée (2, 12, 32, 42) en fonction dudit angle de défaut ($\gamma d$).

**3.** procédé selon la revendication 1 **caractérisé en ce que** ledit angle de correction $\gamma c$ est sensiblement unique.

**4.** Procédé selon l'une des revendications précédentes, **caractérisé en ce que** ledit défaut d'orientation de ladite surface de réception ( 43) est déterminé par rapport à un axe d'une fusée opposée (41) dudit système de suspension (40).

**5.** Procédé selon l'une des revendications précédentes, **caractérisé en ce qu'**il comprend, en outre, l'étape consistant à fixer ladite fusée (2, 12, 32, 42) sur ledit système de suspension (1, 31, 40, 15) par l'intermédiaire de 4 vis.

**6.** Procédé selon l'une des revendications précédentes, **caractérisé en ce qu'**il comprend, en outre, l'étape consistant à fixer ladite fusée (2, 12, 32, 42) sur ledit système de suspension (1, 31, 40, 15) par l'intermédiaire de perçages oblongs.

## Patentansprüche

**1.** Verfahren für die Montage eines Achsschenkels (2, 12, 32, 42) an einem Radaufhängungssystem (1, 31, 40, 15), das für die Ausstattung eines Fahrzeugs vorgesehen ist, wobei das Radaufhängungssystem eine Aufnahmefläche (3, 13, 43) für den Achsschenkel aufweist, wobei der Achsschenkel eine Achsschenkelachse (OA) und eine Auflagefläche (4, 14) für das Radaufhängungssystem besitzt, wobei eine charakteristische Achse (Oy) der Auflagefläche einen vorgegebenen Korrekturwinkel "$\gamma c$" mit der Achse (OA) des Achsschenkels bildet, wobei die Aufnahmefläche in Bezug auf ein Bezugssystem (OXYZ), das durch die Sollwinkel des Sturzes und der Spur für das Fahrzeug definiert ist, eine Ausrichtungsabweichung aufweist, die in einen Abweichungswinkel "$\gamma d$" und einen Abweichungsazimutwinkel "$\delta d$" aufgeteilt werden kann, wobei der Abweichungswinkel der Winkel ist, durch den eine für die Ausrichtung der Aufnahmefläche charakteristische Achse (Oy) von der entsprechenden Achse (OY) des Bezugssystems getrennt ist, wobei der Abweichungsazimutwinkel der Azimutwinkel in einer Bezugsebene (OXZ) des Bezugssystems der für die Ausrichtung der Aufnahmefläche charakteristischen Achse (Oy) ist, wobei das Verfahren die folgenden Schritte umfasst:

- Bestimmung des Abweichungsazimutwinkels "δd", und
- Positionierung des Achsschenkels an dem Radaufhängungssystem in einer solchen Weise, dass die Achse des Achsschenkels gemäß einem Korrekturazimutwinkel "δc" ausgerichtet ist, wobei δc in etwa δd + π entspricht.

2. Verfahren nach Anspruch 1, **dadurch gekennzeichnet, dass** es ferner einen Schritt umfasst, der darin besteht, einen Achsschenkel (2, 12, 32, 42) in Abhängigkeit von dem Abweichungswinkel (γd) auszuwählen.

3. Verfahren nach Anspruch 1, **dadurch gekennzeichnet, dass** der Korrekturwinkel γc im Wesentlichen nur ein einziger Winkel ist.

4. Verfahren nach einem der vorhergehenden Ansprüche, **dadurch gekennzeichnet, dass** die Abweichung der Ausrichtung der Aufnahmefläche (43) in Bezug auf eine dem Radaufhängungssystem (40) gegenüberliegende Achse (41) eines Achsschenkels bestimmt wird.

5. Verfahren nach einem der vorhergehenden Ansprüche, **dadurch gekennzeichnet, dass** es ferner einen Schritt umfasst, der darin besteht, den Achsschenkel (2, 12, 32, 42) an dem Radaufhängungssystem (1, 31, 40, 15) über 4 Schrauben zu befestigen.

6. Verfahren nach einem der vorhergehenden Ansprüche, **dadurch gekennzeichnet, dass** es ferner einen Schritt umfasst, der darin besteht, den Achsschenkel (2, 12, 32, 42) an dem Radaufhängungssystem (1, 31, 40, 15) über Langlöcher zu befestigen.

**Claims**

1. Method for the fitting of a stub axle (2, 12, 32, 42) on a suspension system (1, 31, 40, 15) designed for mounting on a vehicle, the said suspension system comprising a stub axle receiving surface (3, 13), said stub axle (2, 12, 32, 42) having a stub axle axis (OA) and a support surface (4, 14) onto said suspension system, such that a characteristic axis (Oy) of the said support surface (4, 14) forms a given correction angle "γc" with the said stub axle axis (OA), said receiving surface having, relative to an axis system (OXYZ) defined by the nominal camber and toe-in angles for said vehicle, an orientation error that can be decomposed into an error angle "γd" and an error azimuth "δd", the error angle being the angle that separates an axis (Oy) which characterises the orientation of the receiving surface from the corresponding axis (OY) of the said axis system, the error azimuth being the azimuth, in a reference plane (OXZ) of said axis system, of the axis (Oy) that characterises the orientation of the receiving surface, the said method comprising the following stages:

- determination of the error azimuth "δd",
- positioning of said stub axle on said suspension system in such manner that the axis of said stub axle is orientated along a correction azimuth "δc", δc being essentially equal to δd + π.

2. Method according to Claim 1, **characterised in that** it comprises in addition a stage that consists in the selection of a stub axle (2, 12, 34, 42) as a function of the said error angle (γd).

3. Method according to Claim 1, **characterised in that** the said correction angle γc is essentially a single angle.

4. Method according to any of the preceding claims, **characterised in that** the said orientation error of the said receiving surface (43) is determined relative to an axis of an opposite stub axle (41) of the said suspension system (40).

5. Method according to any of the preceding claims, **characterised in that** it comprises in addition a stage that consists in fixing the said stub axle (2, 12, 32, 42) on the said suspension system (1, 31, 40, 15) by means of 4 screws.

6. Method according to any of the preceding claims, **characterised in that** it comprises in addition a stage that consists in fixing the said stub axle (2, 12, 32, 42) on the said suspension system (1, 31, 40, 15) with the aid of oblong holes.

Fig 1

EP 1 272 385 B1

**Fig 2a**

**Fig 2b**

EP 1 272 385 B1

## Fig 3

EP 1 272 385 B1

# Fig 4

$$\beta = \beta N + \beta d$$

**Fig 5**